Europäisches Patentamt

European Patent Office

Office européen des brevets

(19)

(11) **EP 1 158 787 A1**

(12) **DEMANDE DE BREVET EUROPEEN**

(43) Date de publication:
**28.11.2001 Bulletin 2001/48**

(51) Int Cl.⁷: **H04N 5/235**, H04N 5/225

(21) Numéro de dépôt: **01401346.0**

(22) Date de dépôt: **22.05.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **26.05.2000 FR 0006764**

(71) Demandeur: **Thales**
**75008 Paris (FR)**

(72) Inventeur: **Pastre, Jean-Luc**
**94117 Arcueil Cedex (FR)**

(74) Mandataire: **Dudouit, Isabelle et al**
**Thomsom-CSF**
**Propriété Industrielle**
**13, avenue Président Salvador Allende**
**94117 Arcueil Cedex (FR)**

(54) **Dispositif et procédé d'analyse d'un ou de plusieurs signaux à grande dynamique**

(57) Dispositif permettant d'analyser ou de reconstruire un ou plusieurs signaux Ij provenant d'une ou plusieurs sources lumineuses. Il comporte

- des moyens (2) pour séparer le ou les signaux $I_j$ en au moins deux signaux $I_{j1}$ et $I_{j2}$,
- au moins deux voies ($V_1$, $V_2$) possédant respectivement un gain ($G_1$, $G_2$) et une dynamique ($D_1$, $D_2$), lesdites voies comportant au moins un capteur (4,

10), et adaptées pour obtenir en sortie un signal $I'_{j1}$, $I'_{j2}$, d'amplitude $A_{j1}(t)$, $A_{j2}(t)$,
- un dispositif (7) de traitement des signaux $I'_{j1}$, $I'_{j2}$ adapté à mémoriser l'amplitude $A_{j1}(t)$, $A_{j2}(t)$ d'au moins un des deux signaux $I'_{j1}$, $I'_{j2}$ lorsque $I'_{j1}$ et/ou $I'_{j2}$ est situé en dessous d'une valeur seuil $S_{max}$ et à déterminer l'amplitude $A_j(t)$ du signal $I'_j$ correspondant.

Caméra à balayage de fente à grande dynamique.

Fig. 1

EP 1 158 787 A1

## Description

La présente invention concerne un dispositif d'analyse ou de reconstruction d'un ou de plusieurs signaux à haute dynamique et son procédé de mise en oeuvre.

Elle est notamment utilisée pour l'analyse d'impulsions brèves lumineuses avec des résolutions temporelles inférieures à la picoseconde.

Elle permet, par exemple l'analyse de nombreux signaux simultanés, transportés par fibres optiques et qui présentent des dynamiques importantes.

Elle peut aussi être utilisée dans tous les domaines mettant en oeuvre des signaux à grande dynamique.

Différents dispositifs sont décrits dans l'art antérieur pour analyser les signaux lumineux rapides.

Par exemple, les caméras à balayage de fente sont largement utilisées. Le tube convertisseur d'image est l'élément central de ce dispositif. Il s'agit d'un tube à vide constitué d'une photocathode, d'électrodes d'accélération et de focalisation, de plaques de déflexion et d'un écran au phosphore. Le signal lumineux à analyser est projeté sur la photocathode à travers une fente fine. Les électrons produits par la photocathode dans le tube sont accélérés et focalisés. Le faisceau électronique ainsi obtenu est défléchi à grande vitesse par les plaques de déflexion et vient balayer l'écran au phosphore. L'image obtenue sur l'écran représente donc les variations du signal d'entrée au cours du temps. Cette image fugitive est enregistrée soit par photographie, soit par une caméra vidéo monocoup associée à une mémoire d'image.

Pour des vitesses de balayage faibles ou moyennes, la résolution temporelle est égale au produit de la résolution spatiale par la vitesse de balayage. Par exemple, pour une résolution spatiale de 0,1 millimètre et une vitesse de balayage de 10 millimètres par nanoseconde, la résolution temporelle est de 10 ps.

Lorsque l'amplitude du signal d'entrée d'un tube convertisseur augmente, un phénomène de saturation dégradant les résolutions spatiales et temporelles apparaît. Ce phénomène est dû principalement à la charge d'espace dans le tube car la trop grande densité d'électrons défocalise le faisceau en raison des forces de répulsion entre les électrons.

Il a été démontré que la densité de courant admissible dans le tube dépend de la distance entre la photocathode et la grille d'accélération et de la tension d'accélération appliquée entre ces deux électrodes. Il existe donc une limitation physique à cette densité de courant due aux phénomènes de claquage électrique. La densité de courant maximale ne peut dépasser quelques dizaines d'ampères par centimètres carrés, la densité de courant de saturation correspondant à un nombre maximal d'électrons par unité de temps.

Ainsi, dans l'exemple précédent, pour un faisceau de 0,1 millimètre de diamètre et pour une résolution temporelle de 10 picosecondes, un nombre maximal d'environ 500 000 électrons par unité de temps est calculé lorsque la densité de courant atteint 100 ampères par centimètres carrés.

Le plus petit niveau mesurable est limité par le bruit de mesure. Dans un tube à balayage de fente, le bruit résulte du caractère corpusculaire du photocourant dans le tube. Pour un nombre donné N de photoélectrons par unité de temps, la loi de Poisson indique que le rapport signal sur bruit est égal à la racine carrée de ce nombre N. Ainsi, pour obtenir un rapport signal sur bruit de 100, le faisceau électronique doit comporter 10 000 électrons par unité de temps.

Les applications des caméras à balayage de fentes peuvent ainsi être limitées par leur dynamique d'amplitude, c'est-à-dire la valeur du rapport entre le signal de saturation et le plus petit signal mesurable. Ainsi, dans l'exemple donné précédemment, cette dynamique est de 50, ce qui est relativement limité pour certaines applications. La dynamique peut varier de quelques dizaines à quelques centaines en fonction des caractéristiques physiques du tube et de la vitesse d'analyse.

Le brevet FR 2 660 822 divulgue une caméra comportant deux capteurs CCD dont les signaux de sortie sont combinés pour obtenir une plus grande dynamique d'amplitude afin de reconstituer une image à un instant donné.

Dans la suite de la description, on désigne par le mot « capteur » une caméra à balayage de fente ou encore une camera CCD ou encore tout dispositif présentant une fonction identique ou sensiblement identique.

L'objet de la présente invention concerne un dispositif d'analyse de signaux lumineux à grande dynamique d'amplitude. Il concerne aussi une caméra à balayage de fente à grande dynamique.

A cet effet, l'invention a pour objet un dispositif permettant d'analyser ou de reconstruire un ou plusieurs signaux $I_j$ provenant d'une ou de plusieurs sources lumineuses. Il est caractérisé en ce qu'il comporte au moins:

- des moyens pour séparer le ou les signaux $I_j$ en au moins deux signaux $I_{j1}$ et $I_{j2}$,
- au moins deux voies possédant respectivement un gain et une dynamique, lesdites voies comportant au moins un capteur et sont adaptées pour obtenir en sortie un signal $I'_{j1}$, $I'_{j2}$, d'amplitude respectivement $A_{j1}(t)$, $A_{j2}(t)$,
- un dispositif de traitement des signaux $I'_{j1}$, $I'_{j2}$ adapté à mémoriser l'amplitude $A_{j1}(t)$, $A_{j2}(t)$ d'au moins un des deux signaux $I'_{j1}$, $I'_{j2}$ lorsque $I'_{j1}$ et/ou $I'_{j2}$ est situé en dessous d'une valeur seuil $S_{max}$ et à déterminer l'amplitude $A_j(t)$ du signal $I'_j$ correspondant.

L'invention concerne aussi un procédé permettant d'analyser un signal à grande dynamique. Il est caractérisé en ce qu'il comporte au moins les étapes suivantes :

(a) séparer le signal à analyser en au moins deux signaux $I_{j1}$, $I_{j2}$,
(b) faire passer chaque signal $I_{j1}$, $I_{j2}$ à travers au moins une voie comportant au moins un capteur, chacune des voies ayant une dynamique $D_1$, $D_2$,
(c) mémoriser chaque signal $I'_{j1}$ et $I'_{j2}$ issus de deux voies $V_1$ et $V_2$ sous une forme numérique de façon à obtenir pour un indice j les valeurs des amplitudes correspondantes $A_{j1}(t)$ et $A_{j2}(t)$,
(d) lire les valeurs $A_{j1}(t)$, et comparer chacune des valeurs à une valeur seuil $S_{max}$,
(e) si $A_{j1}(t)$ est inférieur à la valeur seuil $S_{max}$, la valeur de l'amplitude $A_{j1}(t)$ et l'instant t correspondant sont mémorisés,
(f) si $A_{j1}(t)$ est supérieure à la valeur seuil $S_{max}$, alors la valeur $A_{j2}(t)$ et l'instant t correspondant sont mémorisés ,
(g) déterminer le signal résultant d'amplitude $A_j(t)$ à partir des couples de valeurs d'amplitude [$(A_{j1}(t), t)$ ; $(A_{j2}(t), t)$].

Le dispositif et le procédé selon l'invention s'appliquent à une caméra à balayage de fente à grande dynamique.

L'invention présente notamment les avantages suivants :

- elle permet d'analyser un ou plusieurs signaux présentant de grande dynamique,
- elle permet d'obtenir une grande dynamique sur un grand nombre de signaux simultanés,
- elle se présente à l'utilisateur comme une caméra classique sans difficultés particulières d'utilisation,
- elle est utilisée pour l'analyse de nombreux signaux transportés par fibres optiques.

D'autres caractéristiques et avantages de l'invention apparaîtront à l'aide de la description qui va suivre faite à titre illustratif et nullement limitatif en regard des figures annexées où :

- la figure 1 est un schéma bloc du dispositif d'analyse selon l'invention,
- la figure 2A est une vue en coupe d'un exemple de structure d'un tube convertisseur, et la figure 2B montre la répartition des points correspondant au signal analysé sur l'écran de phosphore d'un tube convertisseur,
- la figure 3 montre une courbe de gains des tubes convertisseurs,
- la figure 4 schématise un algorithme de traitement de signal,
- la figure 5 représente une variante de réalisation du dispositif décrit à la figure 1.

La description qui suit donnée ci-après à titre illustratif et nullement limitatif est relative à l'analyse d'un signal se présentant par exemple sous la forme d'un pinceau lumineux désigné par $I_j$.

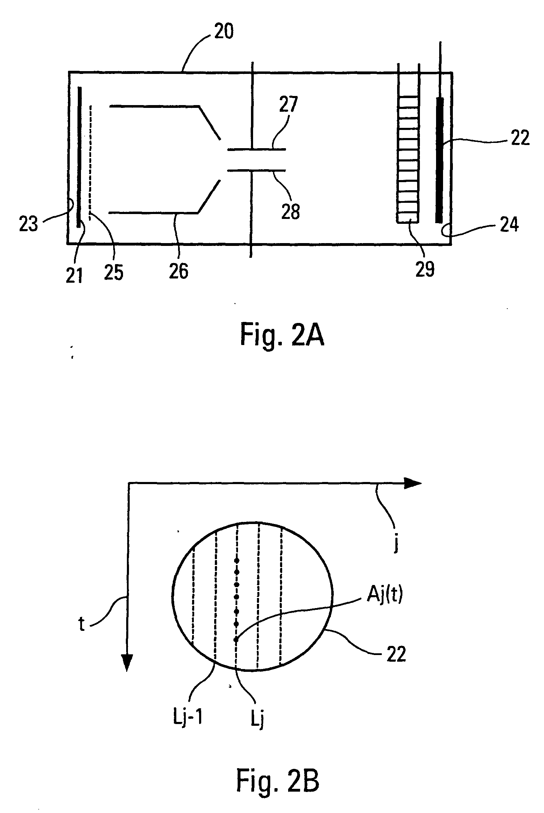

Dans certains cas d'application le signal pourra avoir une certaine largeur spatiale et être décomposé en plusieurs sous-signaux $I_{j-1}$, $I_j$, $I_{j+1}$ tels que décrits à la figure 2B, j étant un indice relié à la position du « sous-signal » dans l'espace.

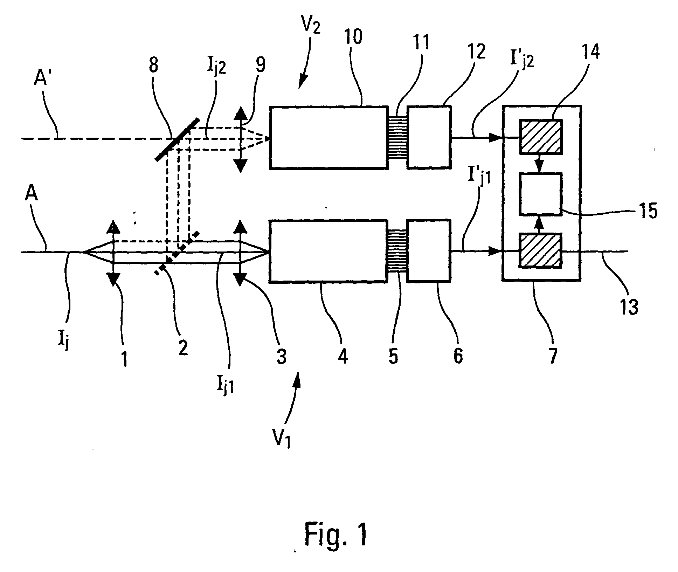

Sur la figure 1 sont représentés sur un premier axe optique A, une première lentille 1 permettant de collimater le signal $I_j$ à analyser provenant d'une source lumineuse, une première voie $V_1$ comportant une lame semi-réfléchissante 2 inclinée par rapport à l'axe optique A, ayant notamment pour fonction de fractionner ou séparer le signal $I_j$ par exemple en deux signaux $I_{j1}$ et $I_{j2}$, une deuxième lentille 3 disposée en amont d'un tube convertisseur 4 couplé lui-même, par exemple, par un ensemble de fibres optiques 5 à une caméra vidéo 6. La sortie de la caméra vidéo est en liaison avec un dispositif de traitement de signal 7. La première voie possède un gain $G_1$ et une dynamique $D_1$.

Sur un deuxième axe optique A', se trouvent successivement un miroir 8, une lentille 9 sensiblement identique à la lentille 3 disposée en amont d'un tube convertisseur 10 couplé à une caméra 12 par exemple à l'aide de fibres optiques 11. Ces différents éléments forment avec la lame semi-réfléchissante 2, une deuxième voie $V_2$ ayant un gain $G_2$ et une dynamique $D_2$. La sortie de la caméra 12 est en liaison avec le dispositif de traitement de signal 7. De la même façon, la deuxième voie $V_2$ présente un gain $G_2$ sensiblement identique au gain $G_1$ et une dynamique $D_2$ sensiblement égale à la dynamique $D_1$.

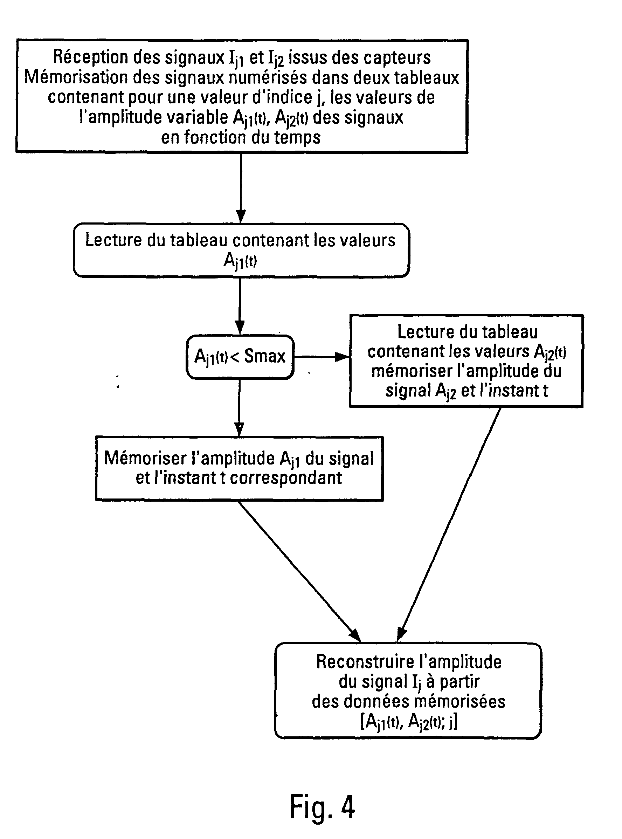

Le dispositif de traitement des signaux 7 comporte par exemple deux mémoires d'image 13, 14 connues de l'Homme du métier, en liaison avec un calculateur 15 tel qu'un PC recevant les deux signaux $I'_{j1}$ et $I'_{j2}$. Chacune des mémoires d'image 13, 14 reçoit et numérise les signaux analogiques $I'_{ji}$, $I'_{j2}$ issus des caméras vidéo 4, 6. Les signaux vidéos numérisés $I'_{j1}$, $I'_{j2}$ sont ensuite mémorisés par exemple dans une des mémoires du calculateur 15 avant d'être traités par un algorithme approprié et décrit à la figure 4. Le calculateur 15 comporte les moyens nécessaires pour mettre en oeuvre l'algorithme, notamment des mémoires, une unité centrale, etc. connus de l'Homme du métier.

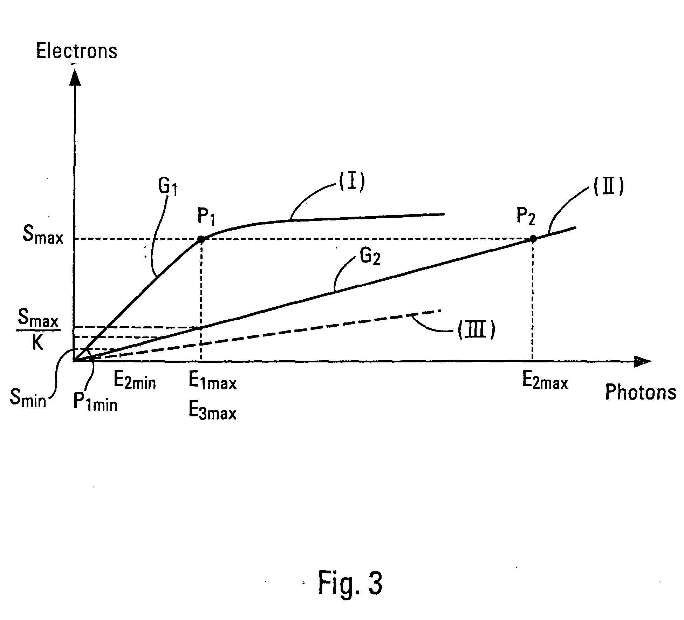

Les caractéristiques de la lame semi-réfléchissante 2, par exemple, son rapport d'atténuation K sont déterminées en fonction des dynamiques des tubes convertisseur qui sont sensiblement identiques à celles des deux voies $V_1$ et $V_2$, selon une méthode telle que celle décrite à la figure 3.

La lame semi-réfléchissante peut être remplacée par un miroir à perte dont le coefficient d'atténuation est déterminé selon un principe identique.

Les lentilles peuvent être remplacées par des miroirs concaves.

Le couplage entre un tube convertisseur et une caméra vidéo peut être réalisé :

- de manière directe, la caméra vidéo est alors équipée d'une fenêtre à fibres optiques,
- à l'aide de lentilles optiques ou encore d'objectifs photographiques.

De tels couplages étant connus de l'Homme du métier, ils ne seront pas détaillés.

La caméra vidéo est par exemple à tube ou à senseur à semiconducteurs.

Lorsque le signal issu de la caméra vidéo est un signal numérique, l'opération de numérisation effectuée par le dispositif de traitement n'est plus nécessaire, ce dernier comportant par exemple une mémoire et une interface adaptées au signal numérique reçu.

## Fonctionnement du dispositif

Le signal lumineux à analyser $I_j$ est collimaté par la lentille 1. Le faisceau ainsi obtenu traverse en partie la lame réfléchissante 2, la fraction $I_{j1}$ de la lumière ayant traversée est focalisée par la lentille 3 sur la photocathode (21 figure 2A) du tube convertisseur 4. L'image de l'écran phosphore (22 figure 2A) est alors captée par la caméra vidéo 6 via le couplage par fibres optiques 5 afin de produire le signal vidéo analogique $I'_{j1}$.

La fraction de la lumière $I_{j2}$ réfléchie par la lame semi-réfléchissante 2 correspond à une petite fraction de la lumière incidente $I_j$. Elle est renvoyée vers le miroir 7 puis focalisée par la lentille 3 sur la photocathode du tube convertisseur 10. L'image de l'écran est alors captée via le couplage par fibres optiques 11 par la caméra 12. Le signal vidéo analogique $I'_{j2}$ est numérisé dans la mémoire d'image 14.

Les deux signaux mémorisés sont ensuite analysés selon l'algorithme détaillé à la figure 4.

La figure 2A représente une vue en coupe d'un exemple de structure d'un tube convertisseur utilisé dans le dispositif selon l'invention ainsi que son fonctionnement.

Le tube convertisseur est par exemple un tube à électron comportant une enceinte à vide 20, une photocathode 21, et un écran phosphore 22 déposé par exemple sur les extrémités intérieures 23, 24 de l'enceinte cylindrique par exemple, deux électrodes 25, 26 ainsi qu'une paire de plaques déflectrices 27, 28.

Une galette de microcanaux 29 peut éventuellement être disposée devant l'écran de phosphore 22.

Les électrons émis de la photocathode 21 sont déviés par le champ électrique formé entre les deux plaques déflectrices 27, 28 et sont multipliés par la galette 29 avant d'être appliqués sur l'écran de phosphore 22 selon leur ordre d'émission.

Selon un autre mode de réalisation, la photocathode du tube est par exemple réalisée sur une lame en fibres optiques. Dans ce cas, l'ensemble des éléments formant le système optique d'entrée (lentilles, lame séparatrice,..) est composé par exemple de fibres optiques et de coupleurs de fibres.

La figure 2 B représente le ou les signaux $I'_j$ reçus sur l'écran de phosphore 22. Un signal $I'_j$ correspond à un signal $I_j$ après traversée de l'entrée optique et des capteurs, composés ici des tubes convertisseurs précités. Un signal $I'_j$ a une position $L_j$ repérée par exemple par rapport à un bord de l'écran de phosphore. L'amplitude en luminosité $A_j(t)$ est variable dans le temps.

L'axe des abscisses j correspond à la distribution spatiale des signaux discrets séparés les uns des autres et l'axe des ordonnées t à l'évolution temporelle du signal correspondant aux variations d'amplitude de l'intensité.

Selon l'axe des ordonnées, la correspondance entre la distance et le temps est donnée par la vitesse de balayage.

Dans certains cas, il y a continuité et les points correspondant aux différents signaux peuvent couvrir pratiquement toute la surface de l'écran phosphore.

Lorsque le signal à analyser est composé de plusieurs signaux lumineux, par exemple lorsque la source lumineuse est formée de plusieurs fibres optiques disposées côte à côte et produisant chacune un signal lumineux $I_j$, les points correspondant aux différents signaux lumineux sont distribués sur l'écran de phosphore selon plusieurs lignes $L_j$.

## Choix de la valeur du coefficient d'atténuation de la lame séparatrice

La figure 3 permet de mieux expliciter la façon de déterminer la valeur du coefficient d'atténuation K de la lame semi-réfléchissante séparant le signal en plusieurs signaux.

Sur cette figure, la courbe (I) représente la courbe du gain $G_1$ de la première voie $V_1$, la courbe (II) la courbe du gain $G_2$ de la deuxième voie $V_2$ et la courbe (III) la courbe du gain G pour la valeur limite du coefficient K.

Ces courbes sont tracées dans un diagramme ayant pour axe des abscisses le nombre des photons contenus dans le signal à analyser $I_j$ et pour axe des ordonnées l'amplitude des signaux recueillis sur l'écran des tubes, par exemple les signaux $I'_{j1}$ et $I'_{j2}$.

La dynamique $D_i$ d'une voie $V_i$ est définie à partir du seuil minimum de coordonnées $(E_{min}, S_{min})$, seuil en dessous duquel le rapport signal à bruit est inférieur à une valeur minimum tolérable et d'un seuil maximum de coordonnées $(E_{max}, S_{max})$ qui correspond à la saturation du tube convertisseur, c'est-à-dire à la limite de réception de signal sans déformation.

Ainsi la dynamique $D_1$ de la première voie $V_1$ est égale à :

$$D_1 = \frac{E_{1\,max}}{E_{1\,min}} = \frac{S_{max}}{S_{min}} \qquad (1)$$

la dynamique $D_2$ de la deuxième voie $V_2$ est égale à :

$$D_2 = \frac{E_{2\,max}}{E_{2\,min}} = \frac{S_{\,max}}{S_{\,min}} \qquad (2)$$

## La dynamique du système comportant les deux tubes

La dynamique du système est égale au rapport entre le plus grand signal d'entrée mesurable, c'est-à-dire $E_{2max}$ et le plus petit signal mesurable c'est-à-dire $E_{1min}$

$$D = \frac{E_{2\,max}}{E_{1\,min}} \qquad (3)$$

Dans le cas où les deux tubes du système présentent des gains sensiblement identiques, le rapport entre les pentes des courbes (I) et (II) est égal au coefficient d'atténuation entre les deux voies. En conséquence,

$$E_{2\,max} = K \times E_{1\,max}$$

$\Rightarrow$　la valeur de K est choisie pour satisfaire cette relation. Et donc la dynamique D du système à deux tubes est obtenue par la relation

$$D = K \times \frac{E_{1\,max}}{E_{1\,min}} = K \times D_1$$

La dynamique du système à deux tubes est égale ou sensiblement égale à la dynamique d'un seul tube multipliée par le rapport d'atténuation K.
La plus grande dynamique possible pour le système est obtenue à partir de la plus grande valeur du coefficient K. Cette plus grande valeur de K est par exemple déterminée par la courbe (II) de la figure 3 pour laquelle la plus petite valeur mesurable sur la deuxième voie $V_2$ est égale à la plus grande valeur mesurable pour la première voie $V_1$. En effet, au-delà de cette limite il existerait des valeurs d'entrée pour lesquelles le premier tube serait saturé alors que le deuxième tube présenterait une valeur de rapport signal/bruit trop faible.
Ainsi la valeur limite pour le coefficient K est atteinte lorsque
$E_{3min} = E_{1max}$
Ce qui signifie que

$$K = \frac{E_{3\,min}}{E_{1\,min}} = \frac{E_{1\,max}}{E_{1\,min}} = D_1$$

La plus grande dynamique pour le système composé de deux tubes sera obtenue pour $K=D_1$ (5)
et la valeur de K sera choisie pour être la plus proche possible de la valeur de la dynamique $D_1$ de la première voie $V_1$.
Un exemple de mise en oeuvre du procédé selon l'invention pour le dispositif décrit à la figure 1 est donné ci-dessous.

## Etapes du procédé

Pour un signal $I_j$ d'indice j donné, le procédé comporte par exemple les étapes suivantes :

a) séparer le signal $I_j$ en au moins deux signaux $I_{j1}$ et $I_{j2}$, avec $I_{j1} = K*I_{j2}$ où K est le coefficient d'atténuation de la lame de séparation, K étant fixé en fonction de la dynamique $D_1$ du tube convertisseur afin de satisfaire la relation $E_{2\,max} = K\ x\ E_{1\,max}$,
b) faire passer les signaux $I_{j1}$ et $I_{j2}$ à travers, respectivement, les tubes de conversion 4, 10 et les caméras vidéo 6, 12, deux signaux $I'_{j1}$ et $I'_{j2}$ étant ainsi obtenus en sortie des deux voies $V_1$, $V_2$,
c) lorsque les signaux $I'_{j1}$ et $I'_{j2}$ sont analogiques, les numériser au moyen de la mémoire d'image 13, 14 et les stocker ; les signaux stockés constituent par exemple deux banques de données se présentant sous la forme de tableaux qui, pour un indice j donné, comprennent la valeur des amplitudes $A_{j1}$ des signaux après séparation, en fonction du temps t, ici la valeur de $A_{j1}(t)$ et la valeur de $A_{j2}(t)$,
d) ces deux tableaux sont lus l'un après l'autre par le calculateur. Par exemple, le calculateur compare dans un premier temps la valeur de chaque amplitude $A_{j1}(t)$ à une valeur seuil $S_{max}$ déterminée à partir des caractéristiques du tube convertisseur 4 de gain $G_1$,
e) si $A_{j1}(t) \le S_{max}$ alors le calculateur mémorise le couple $[A_{j1}(t), t]$ dans une de ses mémoires,
f) si $A_{j1}(t) > S_{max}$, alors le calculateur lit le deuxième tableau et mémorise la valeur $A_{j2}(t)$ correspondant au même instant t,
g) à partir des valeurs $A_{j1}(t)$, $A_{j2}(t)$ mémorisées et des valeurs de t correspondantes, le calculateur détermine l'amplitude $A_j(t)$ du signal $I'_j$, (le signal $I'_j$, étant une image du signal initial I au gain des convertisseurs près).
La sélection et la mémorisation des amplitudes des signaux permettent de former un signal numérique correspondant, au gain du système près, au signal initial.

Pour un signal à analyser distribué spatialement et repéré selon plusieurs positions j, le calculateur réitère les étapes a) à g) pour chaque indice j.
Selon un autre mode de réalisation, le système d'analyse de signal peut comporter n tubes (n voies ) ayant chacun(e) une dynamique $G_n$ et (n-1) lames séparatrices ayant chacune un coefficient d'atténuation Kn donné par exemple en appliquant les relations (4) et (5) explicitées ci-dessus avec

$K_n \leq D_n$.

Dans ce cas, le signal $I_j$ à analyser est séparé en plusieurs signaux $I_{jn}$ au moyen de plusieurs lames séparatrices ayant un coefficient d'atténuation $K_n$ dont les valeurs sont choisies selon le mode décrit précédemment et le signal est reconstruit ou analysé au niveau du calculateur à partir des amplitudes des signaux $A_n(t)$ mémorisées pour une position j donnée ou pour toutes les positions j lorsque le signal est aussi distribué spatialement.

Par exemple pour un système comportant 3 tubes ayant chacun une dynamique $D_1$, $D_2$ et $D_3$, l'étape f) est remplacée par une étape f') où lorsque $A_{j1}(t) > S_{max}$, la valeur $A_{j2}(t)$ est comparée à la valeur seuil maximum $S_{max}$ et si $A_{j2}(t) > S_{max}$ alors la valeur $A_{j3}(t)$ correspondant au signal obtenu par le troisième tube convertisseur est mémorisé.

L'amplitude du signal est alors obtenue à partir de toutes les valeurs d'amplitude $A_{j1}(t)$, $A_{j2}(t)$ et $A_{j3}(t)$ et des valeurs temporelles t correspondantes mémorisées pour une position j donnée.

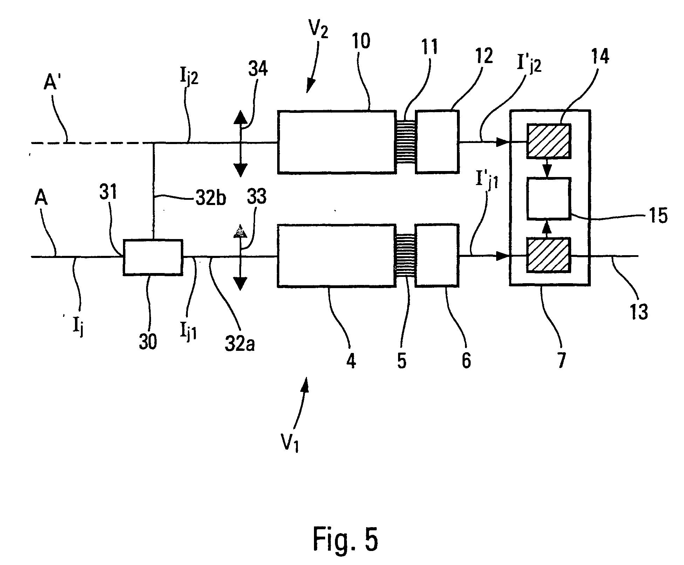

La figure 5 schématise une variante de réalisation pour le dispositif où les moyens permettant de séparer le faisceau le signal $I_j$ à analyser sont constitués par un coupleur à fibre optique. Les références identiques à celles utilisées à la figure 1 représentent des éléments identiques qui ne seront donc pas décrits à nouveau.

Le coupleur à fibre optique 30 comporte par exemple une entrée 31 qui reçoit le signal à analyser et une ou plusieurs sorties 32i, dans cet exemple de réalisation, deux sorties 32a et 32b ont été représentées.

Selon le coupleur utilisé, les sorties 32i peuvent être identiques, c'est-à-dire que le faisceau à analyser est séparé en plusieurs faisceaux $I_{jn}$ identiques ou sensiblement identiques, c'est-à-dire correspondant à une même fraction de la lumière incidente ou encore en n faisceaux $I_{jn}$ différents, chaque faisceau correspond à une fraction de la lumière incidente $I_j$, n étant le nombre de sorties possibles du coupleur.

Comme il a été décrit dans la figure 1, la fraction de la lumière $I_{j2}$ obtenue sur la deuxième sortie 32b du coupleur correspond à une petite fraction de la lumière incidente $I_j$.

Les deux faisceaux de lumière $I_{j1}$ et $I_{j2}$ se présentent sous la forme de faisceaux divergents qui sont transformés en faisceaux convergents à l'aide de deux lentilles 33 et 34 disposées sur les axes optiques A et A'.

Les faisceaux sont focalisés par ces deux lentilles respectivement sur les photocathodes des tubes convertisseurs 4 et 10 et analysés selon l'algorithme précédemment exposé pour expliquer le fonctionnement du dispositif de la figure 1.

Sans sortir du cadre de l'invention le dispositif et le procédé décrits précédemment en relation aux figures 1 à 4 s'appliquent :

- pour analyser un signal correspondant à la projection d'un faisceau laser unique à travers une fente. Dans ce cas, la lentille pour collimater le faisceau n'est pas nécessaire,
- pour analyser une image linéaire telle qu'un spectrogramme issue d'un spectromètre ou la coupe d'un phénomène physique lumineux,
- pour l'analyse d'un signal formé par une rangée de fibres optiques chacune transportant une information distincte.

**Revendications**

1. Dispositif permettant d'analyser ou de reconstruire un ou plusieurs signaux $I_j$ provenant d'une ou de plusieurs sources lumineuses **caractérisé en ce qu'**il comporte au moins :

   - des moyens (2) pour séparer le ou les signaux $I_j$ en au moins deux signaux $I_{j1}$ et $I_{j2}$,
   - au moins deux voies ($V_1$, $V_2$) possédant respectivement un gain ($G_1$, $G_2$) et une dynamique ($D_1$, $D_2$), lesdites voies comportant au moins un capteur (4, 10), les voies étant adaptées à obtenir en sortie un signal $I'_{j1}$, $I'_{j2}$, d'amplitude $A_{j1}(t)$, $A_{j2}(t)$,
   - un dispositif (7) de traitement des signaux $I'_{j1}$, $I'_{j2}$ adapté à mémoriser l'amplitude $A_{j1}(t)$, $A_{j2}(t)$ d'au moins un des deux signaux $I'_{j1}$, $I'_{j2}$ lorsque $I'_{j1}$ et/ou $I'_{j2}$ est situé en dessous d'une valeur seuil $S_{max}$ et à déterminer l'amplitude $A_j(t)$ du signal $I'_j$ correspondant.

2. Dispositif selon la revendication 1 **caractérisé en ce que** le dispositif de traitement des signaux opère de la manière suivante :
   pour un signal $I'_j$ correspondant à une position j spatiale donnée

   - si l'amplitude $A_{j1}(t)$ est inférieure ou égale à une valeur seuil $S_{max}$ alors le dispositif de traitement mémorise le couple de valeurs ($A_{j1}(t)$, t),
   - si l'amplitude $A_{j1}(t)$ est supérieure à la valeur seuil $S_{max}$, alors le dispositif de traitement mémorise le couple de valeurs ($A_{j2}(t)$, t) et
   - à partir des valeurs mémorisées ($A_{j1}(t)$, t), ($A_{j2}(t)$, t) le dispositif détermine les valeurs d'amplitude correspondantes $A_j(t)$ afin d'obtenir le signal $I'_j$.

3. Dispositif selon l'une des revendications 1 ou 2 **caractérisé en ce que** lesdits moyens de séparation du signal $I_j$ ont un coefficient d'atténuation K déterminé pour que K soit inférieur ou égal à la dynamique d'au moins une desdites voies ($V_1$, $V_2$).

4. Dispositif selon la revendication 3 **caractérisé en**

**ce que** les moyens de séparation ont une valeur de coefficient d'atténuation K sensiblement égale à la dynamique d'au moins une desdites voies $V_1$, $V_2$.

5. Dispositif selon l'une des revendications 1 à 4 **caractérisé en ce que** les capteurs sont des caméras à balayage de fente.

6. Dispositif selon l'une des revendications 1 à 5 **caractérisé en ce qu'**il comporte n voies ayant une dynamique $D_n$, (n-1) moyens de séparation du ou des signaux $I_j$.

7. Caméra à balayage de fente à grande dynamique selon l'une des revendications 1 à 6.

8. Procédé permettant d'analyser un signal $I_j$ présentant une grande dynamique **caractérisé en ce qu'**il comporte au moins les étapes suivantes :

   a) séparer le signal à analyser en au moins deux signaux $I_{j1}$, $I_{j2}$,
   b) faire passer chaque signal $I_{j1}$, $I_{j2}$ à travers au moins une voie ($V_1$, $V_2$) comportant au moins un capteur (4, 10), chacune des voies ayant une dynamique $D_1$, $D_2$,
   c) mémoriser chaque signal $I'_{j1}$ et $I'_{j2}$ issus des deux voies $V_1$ et $V_2$ sous une forme numérique de façon à obtenir pour un indice j les valeurs des amplitudes correspondantes $A_{j1}(t)$ et $A_{j2}(t)$,
   d) lire les valeurs $A_{j1}(t)$, et comparer chacune des valeurs à une valeur seuil $S_{max}$,
   e) si Aj1 (t) est inférieur à la valeur seuil $S_{max}$, la valeur de l'amplitude $A_{j1}(t)$ et l'instant t correspondant sont mémorisés,
   f) si $Aj_{l1}(t)$ est supérieure à la valeur seuil $S_{max}$, alors la valeur $A_{j2}(t)$ et l'instant t correspondant sont mémorisés ,
   g) déterminer le signal résultant d'amplitude $A_j$ (t) à partir des couples de valeurs d'amplitude $[(A_{j1}(t), t) ; (A_{j2}(t), t)]$.

9. Procédé selon la revendication 8 **caractérisé en ce que** le signal est décomposé en plusieurs signaux $I_j$ avec j variant spatialement, et **en ce que** les étapes (a) à (g) sont réitérées pour chacune des valeurs de j.

10. Procédé selon l'une des revendications 8 et 9 **caractérisé en ce que** la valeur seuil $S_{max}$ correspond à la valeur de saturation du capteur présentant la plus petite dynamique.

11. Procédé selon l'une des revendications 8 à 10 **caractérisé en ce qu'**un capteur comporte une caméra à balayage de fente.

12. Procédé selon l'une des revendications 8 à 10 **ca-**

**ractérisé en ce que** le signal à analyser $I_j$ correspond à la projection d'un faisceau laser unique à travers une fente.

13. Procédé selon l'une des revendications 8 à 10 **caractérisé en ce que** le signal analysé $I_j$ est une image linéaire issue d'un spectromètre ou la coupe d'un phénomène physique.

14. Procédé selon l'une des revendications 8 à 10 **caractérisé en ce que** le signal à analyser $I_j$ est un signal formé par une rangée de fibres optiques chacune des fibres produisant un signal ayant un indice j.

Fig. 1

Fig. 2A

Fig. 2B

Fig. 3

Réception des signaux $I_{j1}$ et $I_{j2}$ issus des capteurs
Mémorisation des signaux numérisés dans deux tableaux
contenant pour une valeur d'indice j, les valeurs de
l'amplitude variable $A_{j1(t)}$, $A_{j2(t)}$ des signaux
en fonction du temps

Lecture du tableau contenant les valeurs
$A_{j1(t)}$

$A_{j1(t)} < Smax$

Lecture du tableau
contenant les valeurs $A_{j2(t)}$
mémoriser l'amplitude du
signal $A_{j2}$ et l'instant t

Mémoriser l'amplitude $A_{j1}$ du signal
et l'instant t correspondant

Reconstruire l'amplitude
du signal $I_j$ à partir
des données mémorisées
$[A_{j1(t)}, A_{j2(t)}; j]$

# Fig. 4

Fig. 5

Office européen
des brevets

**RAPPORT DE RECHERCHE EUROPEENNE**

Numéro de la demande

EP 01 40 1346

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DD 236 811 A (ZEISS JENA VEB CARL) 18 juin 1986 (1986-06-18) | 1,2,6,8,9 | H04N5/235 H04N5/225 |
| A | * page 2, ligne 1 - page 3, ligne 50 * * figures 1,2 * | 3,4,10 | |
| | --- | | |
| X | WO 98 59491 A (SALMI MATTI ;FINNELPRO OY (FI)) 30 décembre 1998 (1998-12-30) | 1 | |
| A | * page 14, ligne 24 - page 16, ligne 26 * * figure 5 * | 2,3,8,9 | |
| | --- | | |
| D,A | FR 2 660 822 A (SCANERA STE CIVILE RECH) 11 octobre 1991 (1991-10-11) * page 2, ligne 12 - ligne 31 * * figure 1 * | 1-14 | |
| | --- | | |
| A | EP 0 155 890 A (COMMISSARIAT ENERGIE ATOMIQUE) 25 septembre 1985 (1985-09-25) * page 1, ligne 1 - page 2, ligne 11 * | 1,5,7,11-14 | |
| | ----- | | **DOMAINES TECHNIQUES RECHERCHES (Int.Cl.7)** |
| | | | H04N |

Le présent rapport a été établi pour toutes les revendications

| Lieu de la recherche | Date d'achèvement de la recherche | Examinateur |
|---|---|---|
| LA HAYE | 5 septembre 2001 | Didierlaurent, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\.....................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 1346

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2001

| Document brevet cité au rapport de recherche | | Date de publication | Membre(s) de la famille de brevet(s) | | Date de publication |
|---|---|---|---|---|---|
| DD 236811 | A | 18-06-1986 | AUCUN | | |
| WO 9859491 | A | 30-12-1998 | FI | 972480 A | 13-12-1998 |
| | | | FI | 973891 A | 13-12-1998 |
| | | | AU | 7769798 A | 04-01-1999 |
| FR 2660822 | A | 11-10-1991 | CA | 2074488 A | 17-08-1991 |
| | | | EP | 0515565 A | 02-12-1992 |
| | | | WO | 9112690 A | 22-08-1991 |
| | | | US | 5638119 A | 10-06-1997 |
| EP 0155890 | A | 25-09-1985 | FR | 2561441 A | 20-09-1985 |
| | | | DE | 3566327 D | 22-12-1988 |
| | | | JP | 8024037 B | 06-03-1996 |
| | | | JP | 60211749 A | 24-10-1985 |

EPO FORM P0460

Pour tout renseignement concernant cette annexe : voir Journal Officiel de l'Office européen des brevets, No.12/82